# EUROPEAN PATENT SPECIFICATION

(11) **EP 3 053 503 B1**
(45) Date of publication and mention of the grant of the patent: **09.06.2021**
(21) Application number: 16152113.3
(22) Date of filing: 20.01.2016
(51) Int. Cl.: A47L 15/00, H02P 6/08

(54) **MOTOR CONTROL BASED ON VIBRATION SENSING**
MOTORSTEUERUNG AUF BASIS VON VIBRATIONSERFASSUNG
COMMANDE DE MOTEUR BASÉE SUR LA DÉTECTION DE VIBRATIONS

(30) Priority: 09.02.2015 US 201514617453
(43) Date of publication of application: 10.08.2016
(73) Proprietor: Electrolux Home Products, Inc., Charlotte, NC 28262 (US)
(72) Inventor: FRANSISCO, Virgil J., Ayden, NC 28513 (US)
(74) Representative: Electrolux Group Patents

(56) References cited:
- US-A1- 2006 237 044
- US-A1- 2012 048 314
- US-A1- 2013 076 286
- US-A1- 2014 150 286
- US-B1- 6 757 592
- US-B1- 6 874 327
- TSOUMAS IOANNIS P ET AL: "Influence of the Inverter's Modulation Technique on the Audible Noise of Electric Motors", IEEE TRANSACTIONS ON INDUSTRY APPLICATIONS, IEEE SERVICE CENTER, PISCATAWAY, NJ, US, vol. 50, no. 1, 1 January 2014 (2014-01-01), pages 269-278, XP011537449, ISSN: 0093-9994, DOI: 10.1109/TIA.2013.2268453 [retrieved on 2014-01-16]

## Description

### TECHNOLOGICAL FIELD

Embodiments of the present invention relate to various systems, method, and apparatuses for controlling motors used in domestic appliances, including dishwashers, and more particularly, for controlling motors used in domestic appliances based on feedback from one or more vibration sensors within the domestic appliance.

### BACKGROUND

A dishwasher typically employs a series of cycles for cleaning dishware disposed within a tub portion of the dishwasher. Each of these cycles generates a level of noise due to the operation of various motors in communication with pumps, vent fans, and/or the like. For example, a circulation pump utilized to pump water and/or a cleaning solution throughout the dishwasher and to spray the water and/or cleaning solution onto the dishware may generate noise during a cleaning cycle. A drain pump may generate noise while pumping the water, soils, and/or cleaning solution out of the dishwasher after the cleaning cycle has been completed. As yet another example, a blower comprising a vent fan and a vent fan motor may generate noise while circulating air throughout the dishwasher during a drying cycle. < insert page 1a >

### BRIEF SUMMARY

Embodiments of the present invention seek to monitor the noise generated from the various pumps and use that information for more efficient control of various systems or processes within the dishwasher. For example, in some embodiments, the noise created by the circulation pump/motor, drain pump/motor, and/or vent fan/motor of the blower can be monitored and used to adjust operation of those components for more efficient operation of the dishwasher. Additionally, in some cases, operation of the circulation pump/motor, drain pump/motor, and/or vent fan/motor of the blower can adjusted to also minimize the level of noise generated by dishwasher.

Some embodiments of the present invention provide a dishwasher comprising a vibration sensor in communication with a controller for controlling the operation of a US 2014/0150286 A1 shows a dishwasher having a blower that is operated during a drying cycle. blower. For example, according to an embodiment, a dishwasher comprising a tub; a blower configured to remove air from the tub, the blower comprising a vent fan and a vent fan motor, wherein the vent fan motor is configured to cause the vent fan to rotate and to evacuate the air from the tub; a vibration sensor (e.g., a microphone or an accelerometer) configured to sense operating characteristics of the vent fan motor; and a controller in communication with the blower and the vibration sensor, wherein the controller is configured to: cause the vent fan motor to operate at variable speeds; receive input from the vibration sensor indicating operating characteristics of the vent fan motor; determine whether the received operating characteristics of the vent fan motor satisfy preferred operating characteristics of the vent fan motor; and adjust, in response to determining that the received operating characteristics of the vent fan motor do not satisfy the preferred operating characteristics, the speed of the vent fan motor. Additionally, the operating characteristics of the vent fan motor comprise an operating frequency; and the controller is also configured to determine whether the received operating characteristics of the vent fan motor satisfy the preferred operating characteristics of the vent fan motor by determining whether the operating frequency of the received operating characteristics of the vent fan motor satisfies a preferred operating frequency. Moreover, the controller may be additionally configured to determine a rotation speed of the vent fan motor, wherein determining a rotation speed of the vent fan motor comprises applying a Fast Fourier Transform and/or digital waveform processing to at least a portion of the operating characteristics. The operating frequency may be determined based at least in part on received changes in sound pressure generated by the vent fan motor. Additionally, the preferred operating characteristics are configured to minimize noise generated by the vent fan motor and/or minimize an amount of energy used by the dishwasher. In various embodiments, the vibration sensor is in contact with the vent fan motor.

Moreover, in various embodiments the dishwasher further comprises a temperature sensor configured to sense an air temperature within the tub; and the controller is further configured to determine whether the received operating characteristics of the vent fan motor and the sensed air temperature satisfy preferred drying characteristics; and adjust, in response to determining that the received operating characteristics of the vent fan motor and the sensed air temperature do not satisfy the preferred drying characteristics, the speed of the vent fan motor.

In yet another embodiment, the dishwasher further comprises a pump (e.g., a circulation pump and/or a drain pump) and a pump motor configured to drive the pump, wherein the controller is further configured to: cause the pump motor to operate at variable speeds; receive input from a pump vibration sensor indicating operating characteristics of the pump motor; determine whether the received operating characteristics of the pump motor satisfy preferred operating characteristics of the pump motor; and adjust, in response to determining that the received operating characteristics of the pump motor do not satisfy the preferred operating characteristics, the speed of the pump motor.

Various embodiments are directed to methods of operating a dishwasher blower comprising a vent fan and a vent fan motor associated with a dishwasher. The method may comprise: causing the vent fan motor to operate at variable speeds; receiving input from a vibration sensor indicating operating characteristics of the vent fan motor; determining whether the received operating characteristics of the vent fan motor satisfy preferred operating characteristics of the vent fan motor; and adjusting, in response to determining that the received operating characteristics of the vent fan motor do not satisfy the preferred operating characteristics, the speed of the vent fan motor. In various embodiments, the operating characteristics of the vent fan motor comprise an operating frequency, and said determining comprises determining whether the received operating characteristics of the vent fan motor satisfy the preferred operating characteristics of the vent fan motor by determining whether the operating frequency of the received operating characteristics of the vent fan motor satisfies a preferred operating frequency. Determining may comprise determining a rotation speed of the vent fan motor, wherein determining a rotation speed of the vent fan motor comprises applying a Fast Fourier Transform and/or digital waveform processing to at least a portion of the operating characteristics.

In various embodiments, the method additionally comprises: receiving input from a temperature sensor indicating an air temperature within the dishwasher; determining whether the received operating characteristics of the vent fan motor and the sensed air temperature satisfy preferred drying characteristics; and adjusting, in response to determining that the received operating characteristics of the vent fan motor and the sensed air temperature do not satisfy the preferred drying characteristics, the speed of the vent fan motor.

In yet another embodiment, the method comprises: causing a pump motor associated with a pump (e.g., a circulation pump and/or a drain pump) to operate at variable speeds; receiving input from a pump vibration sensor indicating operating characteristics of the second motor; determining whether the received operating characteristics of the pump motor satisfy preferred operating characteristics of the pump motor; and adjusting, in response to determining that the received operating characteristics of the pump motor do not satisfy the preferred operating characteristics, the speed of the pump motor.

Other embodiments are directed to a computer program product for operating a dishwasher blower comprising a vent fan and a vent fan motor associated with a dishwasher, wherein the computer program product comprises a non-transitory computer readable storage medium having program code portions stored thereon, the program code portions being configured when said computer program product is run on a control device to: (1) cause the vent fan motor to operate at variable speeds; (2) receive input from a vibration sensor indicating operating characteristics of the vent fan motor; (3) determine whether the received operating characteristics of the vent fan motor satisfy preferred operating characteristics of the vent fan motor; and (4) adjusting, in response to determining that the received operating characteristics of the vent fan motor do not satisfy the preferred operating characteristics, the speed of the vent fan motor. In various embodiments, the operating characteristics of the vent fan motor comprise an operating frequency, and said determining comprises determining whether the received operating characteristics of the vent fan motor satisfy the preferred operating characteristics of the vent fan motor by determining whether the operating frequency of the received operating characteristics of the vent fan motor satisfies a preferred operating frequency. The determining process may comprise determining a rotation speed of the vent fan motor, wherein determining a rotation speed of the vent fan motor comprises applying a Fast Fourier Transform and/or digital signal processing to at least a portion of the operating characteristics.

In various embodiments, the computer program code portions are further configured when said computer program product is run on a control device to: receive input from a temperature sensor indicating an air temperature within the dishwasher; determine whether the received operating characteristics of the vent fan motor and the sensed air temperature satisfy preferred drying characteristics; and adjust, in response to determining that the received operating characteristics of the vent fan motor and the sensed air temperature do not satisfy the preferred drying characteristics, the speed of the vent fan motor.

In yet other embodiments, the program code portions are further configured when said computer program product is run on a control device to: cause a pump motor associated with a pump (e.g., a circulation pump and/or a drain pump) to operate a variable speeds; receive input from a pump vibration sensor indicating operating characteristics of the pump motor; determining whether the received operating characteristics of the pump motor satisfy preferred operating characteristics of the pump motor; and adjust, in response to determining that the received operating characteristics of the pump motor do not satisfy the preferred operating characteristics, the speed of the pump motor.

### BRIEF DESCRIPTION OF THE SEVERAL VIEWS OF THE DRAWINGS

Having thus described embodiments of invention in general terms, reference will now be made to the accompanying drawings, which are not necessarily drawn to scale, and wherein:
Figure 1 is a perspective view of a partially exposed dishwasher, in accordance with some embodiments discussed herein;
Figure 2 is a schematic diagram of a blower according to various embodiments of the present invention;
Figure 3 is an illustration of a cross-sectional front view of a dishwasher during a wash cycle, in accordance with some embodiments discussed herein;
Figure 4 is a flowchart illustration of a method according to some embodiments discussed herein;
Figure 5 is an illustration of exemplary data received by a vibration sensor according to some embodiments discussed herein;
Figure 6 is a schematic diagram of a circulation pump according to some embodiments discussed herein;
Figure 7 is a schematic diagram of a drain pump according to some embodiments discussed herein;
Figure 8 is a flowchart illustration of a method for optimizing operation of a circulation pump according to some embodiments discussed herein; and
Figure 9 is a flowchart illustration of a method of optimizing operation of a drain pump according to some embodiments discussed herein.

### DETAILED DESCRIPTION

The present invention will now be described more fully hereinafter with reference to the accompanying drawings, in which some, but not all embodiments of the invention are shown. Indeed, the invention may be embodied in many different forms and should not be construed as limited to the embodiments set forth herein. Rather, these embodiments are provided so that this disclosure will satisfy applicable legal requirements. Like numbers refer to like elements throughout.

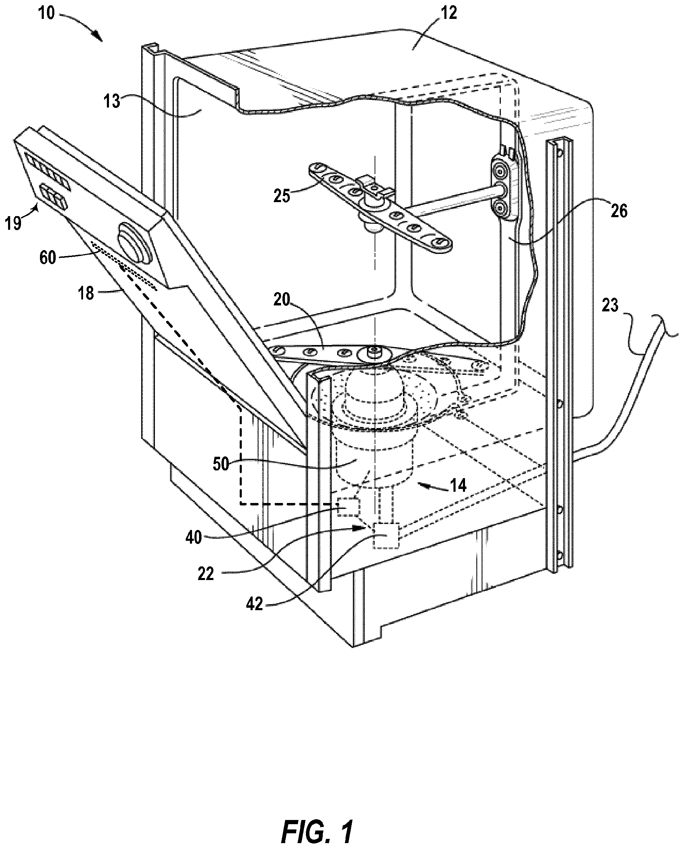

Figure 1 illustrates one example of a dishwasher 10 capable of implementing various embodiments of the present invention. Such a dishwasher 10 typically includes a tub 12 (partly broken away in FIG. 1 to show internal details), having a plurality of walls (e.g., side wall 13) for forming an enclosure in which dishes, utensils, and other dishware may be placed for washing. As known in the art, the dishwasher 10 may also include slidable lower and upper racks (not shown) for holding the dishes, utensils, and dishware.

The tub 12 may include a sump 14 in which wash water or rinse water is collected, typically under the influence of gravity. The wash/rinse water may be pumped by a circulation pump 50 (such as through circulation conduit 26) to one or more spray arms (e.g., lower spray arm 20 and/or middle spray arm 25) mounted in the interior of the tub 12 for spraying the wash/rinse water, under pressure, onto the dishes, utensils, and other dishware contained therein.

The sump 14 and spray arms 20, 25 may be in fluid communication with various operational components of the dishwasher 10. For example, a water valve (not shown) and a drain pump 42 may each be in fluid communication with the sump 14 and spray arms 20, 25. The water valve may be configured to activate (e.g., open, turn ON, etc.) to direct water from a fluid supply/source to the tub 12 of the dishwasher 10. The water valve may also be configured to activate (e.g., close, turn OFF, etc.) to stop directing water to the tub 12. The drain pump 42 may be configured to activate (e.g., turn ON) to remove water from the sump 14 or tub 12. The drain pump 42 may also be configured to deactivate (e.g., turn OFF) to stop removing water from the sump 14 or tub 12. In some embodiments, water and soil collected in the sump 14 can be pumped out of the dishwasher 10 by the drain pump 42 through a drain hose 23. The drain hose 23 comprises a hose that extends from the drain pump 42, or otherwise from the dishwasher 10, to a drain plumbing system (e.g., a residential drain plumbing system) and is configured to remove water and soils from the dishwasher 10 to the drain plumbing system. Thus, through selective activation of the water valve / drain pump, water may be selectively added or removed from the tub 12 of the dishwasher 10. The drain pump and the water valve may be configured to be automatically activated (i.e., electrically opened and closed), though one skilled in the art will appreciate that such components may be actuated in different ways such as, for example, mechanically, hydraulically, and/or in other appropriate manners.

In various embodiments, a door 18 may be pivotably engaged with the tub 12 to selectively permit access to the interior of the tub 12. The door 18 closes to cover and seal the tub 12 when the dishwasher 10 is in operation. Although not indicated in Figure 1, in some instances, the door 18 may comprise an inner wall and an outer wall. The door 18 may include a handle member disposed on an outer surface of the outer wall, to provide the user with a grasping portion. Moreover, in various embodiments, the door 18 may comprise a user interface 19 configured to receive user input during operation of the dishwasher 10.

In various embodiments, the door 18 comprises a drying system of the dishwasher 10 configured to facilitate removal of moisture from the dishware during a drying cycle so as to facilitate drying the dishware disposed within the tub 12. Although a substantial amount of the water used during wash and rinse cycles runs off the dishware due to gravity, some residual water often remains on the dishware following the wash and/or rinse cycles. In various embodiments, the drying system may comprise a duct and a blower 60 (e.g., a centrifugal blower) configured for evacuating humid air from the tub 12. The humid air drawn into the duct by the blower 60 may, in some cases, be condensed and fed back into the dishwasher tub 13 or sump 14 for potential re-use or draining. Additionally, the humid air (or a portion thereof) may, in some cases, be vented to the external environment through an external vent (not shown). Moreover, a heating element may be configured to apply heat to the tub 12 during the drying cycle in order to facilitate evaporation of residual water present on the dishware.

In various embodiments, proxy sensors (e.g., tachometers, Hall-effect sensors, and/or the like) may be utilized to monitor various characteristics of the dishwasher components (e.g., motor rotation speed, pump speed, and/or the like) that may result in noise generation. In various embodiments, the dishwasher may also comprise sound insulation to surround a substantial portion of the dishwasher components (e.g., a blower) in order to minimize unwanted noise from being heard by a user.

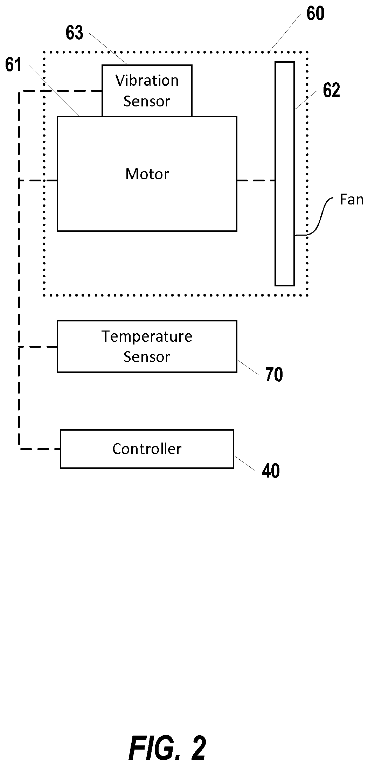

As illustrated in Figure 2, the blower 60 may comprise a motor 61 comprising one or more motor components (e.g., armatures, commutator bars, brushes, rotors, stator windings, cooling fans, bearings, and/or the like) collectively configured to operate a vent fan 62 at a defined rotational speed as determined by a controller 40. In various embodiments, the vent fan 62 may comprise a plurality of vanes (not shown) extending from a central hub, and configured to rotate about the central hub and thereby move air out of the tub 12. Collectively, the blower 60 may be configured for evacuating air from within the tub 12, such as during a drying cycle. Although illustrated in Figure 1 as being incorporated into the door 18, it should be understood that the blower 60 may be located in a variety of locations within the dishwasher 10 such that the blower 60 may evacuate air from within the tub 12 during a drying cycle (e.g., on the top wall of the dishwasher tub). As will be described in greater detail herein, the blower 60 may be in communication with a controller 40 and may activate (e.g., turn ON) in response to receiving a signal (e.g., a pulse-width signal) from the controller 40. The blower 60 may, in some embodiments, be configured to operate in a cyclic manner during the drying cycle. In various embodiments, the blower 60 may be cyclically actuated or pulsed on and off. For example, the blower may be selectively activated, pulsed, or cycled rather than being constantly on. The blower 60 may be selectively activated by receiving a signal from the controller 40, such as a Pulse-Width Modulation (PWM) signal comprising a plurality of pulses each having a defined pulse-width, or by receiving an activation signal of a particular voltage. Thus, the received signals may be digital or analog. In various embodiments, the frequency of the pulses, the relative length of the pulses, or the voltage level associated with the signal received by the blower 60 may be directly related to the speed at which the motor 61 rotates the vent fan 62. For example, a higher frequency of received pulses, a longer pulse-width of the received pulses, or a higher voltage may correlate to a faster vent fan rotation speed. In various embodiments, a single blower 60 comprising a motor 61 and a vent fan 62 may be used to facilitate drying of the dishware within the dishwasher.

In various embodiments, the motor 61 may have associated preferred operating characteristics. Such preferred operating characteristics may be associated with a preferred speed of rotation that may correspond to efficient operation of the motor, such as may result in, for example, longer life of the motor and/or a quiet operating state during which the motor generates a low sound level. In various embodiments, the preferred operating characteristics may be influenced by ambient conditions surrounding the motor 61. For example, the preferred speed of rotation may be influenced by the temperature of the motor 61. Moreover, the motor 61 may be associated with a high sound level operating condition. For example, such high sound level operating condition may correspond to a harmonic frequency of one or more motor components, and may be influenced by ambient conditions around the motor 61. For example, a motor or pump (e.g., motor 61) operating at 3000 revolutions-per-minute (RPM) may emit high sound pressure levels due to brush noise, bearing whine, or other motor inefficiencies. Therefore, adjusting the speed of the motor to 3066 RPM or 2933 RPM may result in lower generated sound levels and/or more efficient motor operation.

The blower 60 may be positioned proximate the top of the dishwasher tub 13 (e.g., in the door 18 such that an inlet of the blower 60 is disposed on an interior wall or other interior portion of the door 18). In such a position, the blower 60 is configured to draw or force air, such as moist air comprising vaporized water present within the tub 12from the tub 12 toward the duct inside the door 18 (e.g., during a drying cycle). In some embodiments, the inlet may include a plurality of louvered fins (not shown) forming a barrier to minimize water (from spray or in the form of airborne droplets) from being pulled into the blower 60. In various embodiments, the dishwasher 10 may additionally comprise a heating device or element (not shown) configured to heat the air within the tub 12. Heating the air causes the air to rise toward an upper portion of the tub 12 and toward the inlet of the blower 60.

The duct may extend from an inlet end to an outlet end in the door 18 between an inner wall and an outer wall of the door 18. The inlet end of the duct may be in communication with the blower such that moist air drawn out of the tub 12 by the blower 60 is directed into the inlet end of the duct. The duct may at least partially define a tortuous path between the inlet opening and the outlet opening that is configured to facilitate condensation of vaporized water from warm air as the warm air and vaporized water are directed through the duct from the inlet toward the outlet. The outlet end of the duct may be in communication with a drain opening disposed proximate a bottom portion of the tub 12. The drain opening may be disposed on the interior wall or other interior portion of the door assembly such that as water condenses to form liquid water, the water flows through the duct, out the drain opening, and into the bottom of the tub 12 to be collected in the sump 14 of the dishwasher 10. As the liquid water is drained through the drain opening, the resulting less humid air flowing through the duct is directed to the outlet end of the duct which may be disposed on the outer wall or other outer portion of the door assembly, such that the less humid air (i.e., as a result of the condensation process) exits the dishwasher 10.

In some embodiments, certain of the particular operational components of the dishwasher (e.g., water valve, drain pump 42, corresponding hoses and wires, etc.) may be housed, disposed, or otherwise positioned within a base portion 22 positioned beneath the tub 12. In some instances, the base portion 22 may be a separate component with respect to the tub 12, such as, for example, a molded polymer component, while in other instances the base portion 22 may be integral with the tub 12 such that the side walls forming the tub 12 also at least partially form the base portion 22.

Operation of the dishwasher 10 typically includes execution of wash cycles having various parameters of the dishwashing process. In particular, the dishwasher 10 may be in an operating mode when undergoing these wash cycles. Moreover, each wash cycle may have different positions that correspond to current operations of the components of the dishwasher (e.g., activating/deactivating the drain pump, activating/deactivating the circulation pump, activating/deactivating the water valve, activating/deactivating a heating element, etc.).

Along these lines, a controller (e.g., the controller 40 shown in Figures 1 and 2) may be used to communicate with certain components of the dishwasher 10. The controller 40 may be housed inside the base portion 22 of the tub 12 or other location so as to facilitate communication with various components of the dishwasher 10. In the depicted embodiment, the controller 40 is housed in the base portion 22 of the tub 12 and is configured to communicate with the circulation pump 50, the circulation pump motor 51, the drain pump 42, and/or the drain pump motor 43. Embodiments of the present invention contemplate communication of the controller with any of the components of the dishwasher (e.g., drain pump 42, water valve, blower 60, etc.). In this way, the controller 40 can control activation/deactivation of any of the components of the dishwasher. As described in greater detail herein, the controller 40 may also be in communication with various sensors configured to detect operating conditions in the dishwasher 10. Furthermore, the controller 40 may be configured to communicate with the dishwasher 10 to determine the current position of the wash cycle being executed by the dishwasher 10.

In various embodiments, the controller 40 may be in communication with one or more vibration sensors (e.g., vibration sensor 63 associated with the blower 60, vibration sensor 45 associated with the drain pump 42, and/or vibration sensor 53 associated with the circulation pump 50), such as a microphone, an accelerometer, a piezoelectric sensor, and/or the like, configured to sense vibrations and/or sound pressure level vibrations emitted by one or more dishwasher components. For example, the vibration sensor 63 may be configured to sense a sound pressure level generated by the motor 61 associated with the blower 60. In various embodiments, the one or more vibration sensors may be coupled to the controller 40 or may be located away from the controller 40. For example, the vibration sensor 63 may be located proximate to and/or in contact with the blower 60 (or its various components), and may be configured to sense vibrations, such as soundpressure level vibrations, generated by the blower 60. The vibration sensor 63 may be positioned in relation to at least a portion of the blower 60 (e.g., the motor 61), such that the vibration sensor 63 detects vibrations generated by the blower 60 while in operation. For example, the vibration sensor 63 may be configured to sense vibrations (e.g., sound vibrations) generated by the one or more motor components rotating within a motor housing. In various embodiments, the vent fan 62 may comprise a single fan, although in other embodiments the vent fan 62 may comprise a plurality of fans.

Similarly, vibration sensor 45 may be located proximate to and/or in contact with the drain pump 42 (or its various components), and may be configured to sense vibrations, such as sound pressure level vibrations, generated by the drain pump 42. The vibration sensor 45 may be positioned in relation to at least a portion of the drain pump 42 (e.g., the drain pump motor 43), such that the vibration sensor 45 may be configured to sense vibrations (e.g., sound vibrations) generated by the one or more motor components rotating with a motor housing.

Moreover, in various embodiments, vibration sensor 53 may be located proximate to and/or in contact with the circulation pump 50 (or its various components), and may be configured to sense vibrations, such as sound pressure level vibrations, generated by the circulation pump 50. The vibration sensor 53 may be positioned in relation to at least a portion of the circulation pump 50 (e.g., the circulation pump motor 51), such that the vibration sensor 53 may be configured to sense vibrations (e.g., sound vibrations) generated by the one or more motor components rotating with a motor housing.

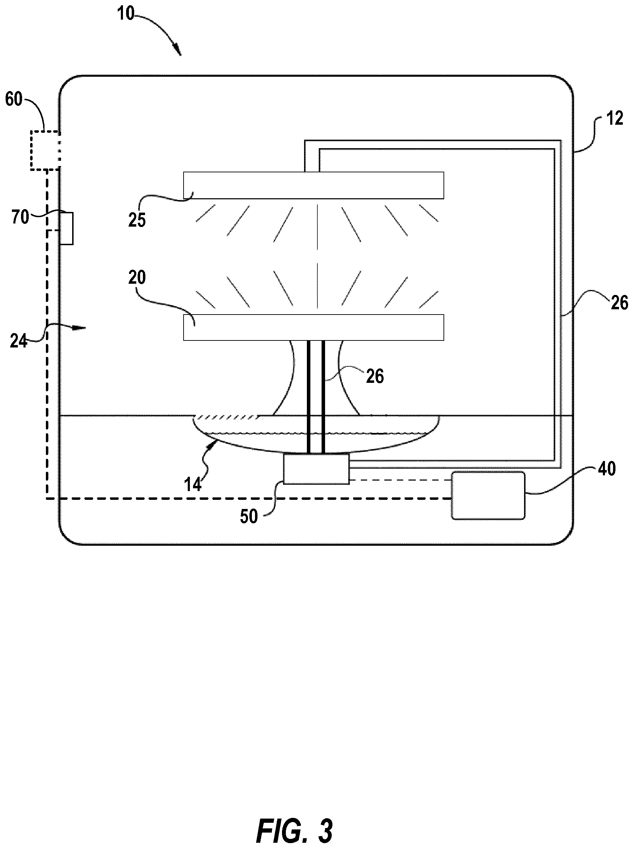

As shown in Figure 2, the controller 40 may be in communication with additional sensors, such as a temperature sensor 70 (as shown in Figures 2 and 3), a turbidity sensor, a humidity sensor, etc. In general, a temperature sensor is a device configured to measure the temperature of a medium such as air or water. In various embodiments, the temperature sensor 70 may be configured to detect a temperature of the air within the tub 12. A turbidity sensor is a device configured to measure the level of particulates (often referred to as the "dirtiness") of water or other liquids. A humidity sensor is a device configured to measure the amount of moisture in or relative humidity of a medium such as air.

Additionally, the controller 40 may be configured to control operation of the dishwasher 10 so as to cease operation of the wash cycle of the dishwasher under various conditions. Likewise, under various circumstances, the controller 40 may be configured to return operation of the dishwasher to the current position of the wash cycle or to a nearby position in the cycle. The controller 40 may be any type of device that can communicate with the components of the dishwasher 10 (e.g., electronically, mechanically, or otherwise). In the case of electronic communication, the controller 40 may include a memory for storing of programming, routines, and variables. In one embodiment, the controller 40 comprises one or more microprocessors or other processors configured to perform the functions described herein and may operate under the control of software. In such a regard, the controller 40 may be configured to execute any of the functions described herein according to various embodiments of the present invention. In various embodiments, the controller 40 may comprise a single consolidated device, or it may comprise a plurality of distributed devices located at various locations in the dishwasher 10. Moreover, various operations described as being performed by the controller 40 may be performed directly by the controller 40, or may be performed by one or more distributed computing devices in communication with the controller 40. As a non-limiting example, certain methods, processes and/or steps as described herein for comparing actual operating characteristics and preferred operating characteristics may be carried out by one or more sensors.

In other embodiments, the controller 40 may be further configured to indicate or otherwise provide error message signals by either storing them in the controller 40 for later access by a user, signaling the dishwasher 10 to display or otherwise indicate the error message to the user (e.g., audibly or visually).

As described in greater detail herein, one or more signals received from the sensors 63, 70, may be used to determine efficient operating conditions of the blower 60 and/or the heating elements. For example, upon a determination that a sound frequency and/or amplitude sensed by the vibration sensor 63 is increasing, the controller 40 may change the rotation speed of the motor 61 and/or the relative lengths of the pulses to be applied to the blower 60. The pulsing of the blower is configured to provide additional air from outside the dishware 10 in order to help pressurize the tub 12 or to otherwise evacuate the vaporized water from the tub 12.

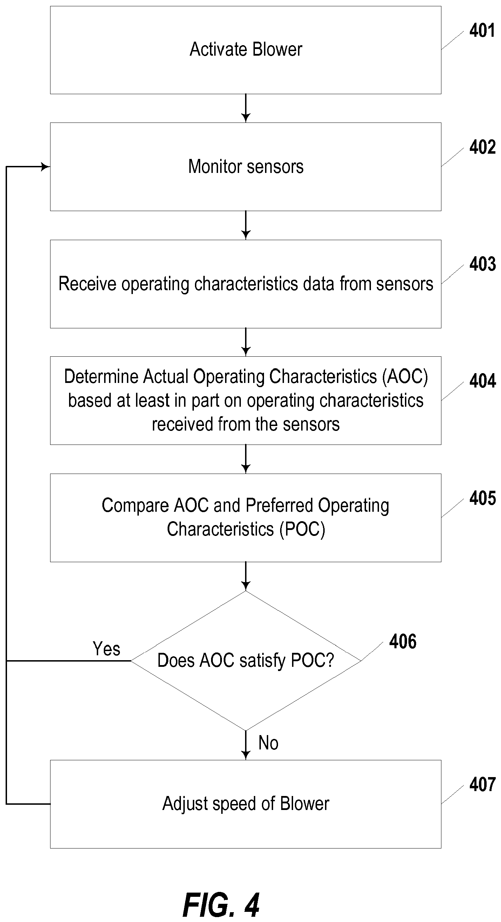

As illustrated in Figure 4, the process of optimizing the blower operation may comprise operations for adjusting the blower operation based at least in part on signals received from sensors associated with the blower 60 and/or tub 12. As shown in Figure 4, the blower 60 may be activated at operation 401. As described herein, the blower 60 may be selectively activated (e.g., pulsed) during a drying cycle. Thus, the blower operation may be optimized during each individual time period (e.g., pulse) during which the blower 60 is activated.

Moreover, the blower 60 may be activated by receiving a signal from the controller 40 configured to activate the motor 61 associated with the blower 60, and thereby operate the vent fan 62. The process may additionally include monitoring of one or more sensors (402), such as a vibration sensor 63 associated with the blower 60 and/or a temperature sensor 70 associated with the tub 12. As stated herein, the vibration sensor 63 may comprise an accelerometer, a microphone, or another vibration sensing device configured to monitor vibrations and sound pressure levels within the dishwasher 10. The vibration sensor 63 may be positioned proximate (e.g., coupled to) the motor 61 of the blower 60 to sense vibrations and/or sounds generated by the motor 61.

In various embodiments, operating characteristics may be received from the one or more sensors at 403. For example, operating characteristics received from the temperature sensor 70 may be indicative of a temperature within the tub 12. Operating characteristics received from the vibration sensor 63 may be indicative of a vibration frequency and/or vibration amplitude generated by a component of the dishwasher (e.g., sound pressure level vibrations generated by the motor 61). In various embodiments, data received from the sensors may be passed through one or more filters, such as a band-pass filter, to minimize the effect of signal noise on the received signals.

At operation 404, the controller 40 may determine operating characteristics of the motor 61 based at least in part on the information obtained by the sensors. In various embodiments, the controller 40 may determine operating characteristics of the motor 61 based on a subset of the information obtained by the sensors. For example, the controller 40 may determine operating characteristics of the motor 61 based on information obtained from the vibration sensor 63 having a voltage maximum and/or cycle period within a predetermined range. Thus, the controller 40 may determine operating characteristics of the motor 61 based on a particular vibration source. For example, the controller 40 may determine operating characteristics based on vibrations caused by an armature having a plurality of commutator bars rotating within a motor housing, vibrations caused by an impeller having a plurality of impeller blades rotating in a pump housing, and/or vibrations caused by a fan having a plurality of rotating fan vanes. For example, a Fast Fourier Transform (FFT) may be applied to at least a portion of the received operating characteristics in order to determine operating characteristics of the motor 61. For example, the FFT may be applied to at least a portion of the received operating characteristics to determine a fundamental frequency associated with the operating characteristics. Based on the determined fundamental frequency, a rotation speed and other characteristics of the motor 61 may be determined.

According to various embodiments, the FFT process comprises steps for analyzing the operating characteristics received from the vibration sensor 63 to determine a fundamental frequency. The fundamental frequency is defined as the most prominent frequency sensed in the analyzed signal (e.g., the received operating characteristics). By applying the FFT process to the signal, the fundamental frequency is manifested as the frequency having the highest amplitude, without regard to the amplitude of the original received signal. In various embodiments, upon a determination that the fundamental frequency of the operating characteristics received from the vibration sensor 63 is equal to the line frequency (the frequency of oscillations of alternating current transmitted from a power plant and received by a household), the second order frequency (the frequency having the second highest amplitude) may be used to determine a rotation speed and other characteristic of the motor 61. For example, the line frequency in the United States is 60 Hz, and therefore upon a determination that the fundamental frequency of the operating characteristics is 60 Hz, the second order frequency as determined by the FFT process may be used to determine characteristics of the motor 61.

In various embodiments, digital waveform processing may be utilized to determine various characteristics of the motor 61. Digital waveform processing may, in various embodiments, comprise steps for minimizing the impact of lower order frequencies (e.g., second order frequencies and lower) on the operating characteristics received from the vibration sensor 63 using waveform smoothing techniques such that frequencies indicative of various characteristics of the motor 61 may be identified. The digital waveform processing may additionally comprise steps for determining the amplitude and/or the pulse-width of the resulting smoothed waveforms to determine the fundamental frequency of the received operating characteristics.

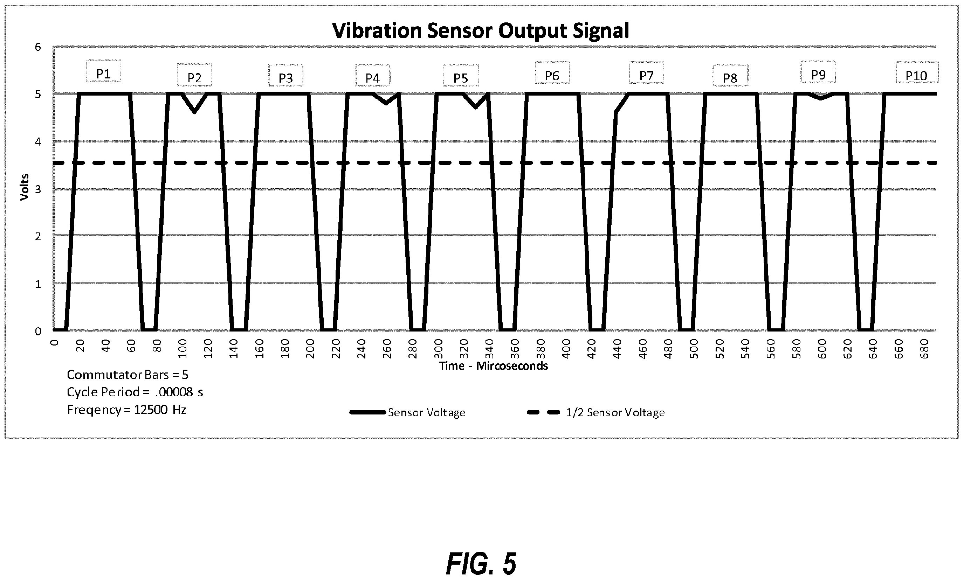

Figure 5 illustrates a non-limiting example of digital waveform processing, which may comprise steps for receiving data indicative of a plurality of vibration pulses measured by the vibration sensor over a particular time period. As shown in Figure 5, 10 pulses (P1-P10) are measured over a 690 microsecond time period. Each vibration pulse may be identified as a plurality of consecutive data points having an increased voltage in the data. The digital waveform processing may comprise steps for determining an average voltage measured by the vibration sensor over the particular time period (illustrated as the dashed horizontal line in Figure 5). Consecutive data points indicative of a voltage measurement higher than the average voltage measurement are thus collectively indicative of a pulse, regardless of any minor changes in voltage measured. Thus, in the illustrated example data of Figure 5, although pulses P2, P4, P5, P7, and P9 include minor changes in voltage during the pulse, these minor voltage changes do not impact the identification of the pulses. Based on the length of time the voltage exceeds the average measured voltage, the pulse width and cycle period may be determined.

However, in various embodiments, the fundamental frequency of the operating characteristics received from the vibration sensor 63 may be determined without additional processing such as FFT analysis and/or digital waveform processing. For example, a vibration signal having minimal or no distortion from lower order frequencies may comprise a fundamental frequency that may be determined without minimizing the impact of low order frequencies.

After determining the fundamental frequency of the motor 61, the motor speed may be determined based on the fundamental frequency and various physical attributes of the motor 61 and/or other physical attributes of the blower 60. For example, a motor comprising an armature having plurality of commutator bars configured to rotate within a motor housing may generate a plurality of vibration pulses during a single revolution equal to the number of commutator bars associated with the armature. The rotation speed of the motor is thus determined by dividing the vibration frequency of the motor by the number of commutator bars associated with the armature. Referring again to Figure 5 as a non-limiting example, the rotation speed of a motor comprising an armature having 5 commutator bars may be determined by dividing the determined fundamental frequency by 5. Thus, as shown in the example of Figure 5, the determined cycle period is 80 microseconds, which corresponds to a frequency of 12,500 Hz. Based on the presence of 5 rotating commutator bars, the motor speed is determined to be 2500 RPM.

As yet another example, the rotation speed of the motor 61 may be determined based at least in part on the number of vanes of the fan 62. Each fan vane may generate a vibration pulse during a single revolution of the fan 62. Thus, the fundamental frequency of the operating characteristics sensed by the vibration sensor 63 may be divided by the number of vanes of the fan 62 to ascertain the rotation speed of the motor 61. As described herein, similar analyses may be utilized to determine a rotation speed of a pump motor (e.g., a circulation pump motor 51 and/or a drain pump motor 43) based on the number of commutator bars of an associated armature and/or based on the number of impeller blades of an associated rotor (e.g., rotor 52 or rotor 44).

Upon identifying the operating characteristics of the motor 61, the controller 40 may compare the identified operating characteristics with Preferred Operating Characteristics (POCs) at 405. For example, the POCs may be indicative of a preferred vent fan rotation speed or a range of preferred vent fan rotation speeds, a preferred maximum motor noise level, a preferred maximum amount of motor vibration, and/or the like. In various embodiments, a plurality of POCs may be defined, wherein a subset of the plurality of POCs may be associated with different stages in a drying cycle of the dishwasher 10. As will be described in greater detail herein, preferred drying characteristics may be defined in the POCs. In various embodiments, data indicative of the POCs may be stored in a memory associated with the controller 40. The POCs may be fixed during the initial set up of the dishwasher 10 during manufacturing, or the POCs may be variable, such that one or more POCs may be modified in response to the controller 40 receiving user input via user interface 19. In various embodiments, the POCs may be indicative of a preferred operating condition for the blower 60. As previously indicated, a preferred operating condition may correspond with a low noise level generated by the blower 60.

The comparison may comprise a determination of whether the operating characteristics satisfy the POCs at operation 406. The determination may involve a determination whether the operating characteristics fall into an acceptable range (e.g., a defined range of preferred characteristics, a tolerance range surrounding a preferred operating characteristic value, below or equal to a maximum level, above or equal to a minimum level, and/or the like). Upon a determination that the operating characteristics satisfy the POCs, the sensors may continue to be monitored during operation 402. The process proceeds to cycle through 402-407 as necessary until the drying cycle is complete.

Upon a determination that the operating characteristics do not satisfy the POCs, the operating signals sent to the blower 60 to operate the motor 61 may be modified in order to adjust the speed of the motor 61. For example, a controller 40 utilizing pulse width modulation to control the speed of the motor 61 may adjust the relative lengths of the "on" and "off pulses in order to modify the speed of the motor 61. After adjusting the speed of the motor 61 (e.g., by transmitting the adjusted operating signal to the motor 61), the process returns to 402 to continue monitoring the sensors. As a non-limiting example, the operating characteristics may indicate that a motor currently operating at 3000 RPM generates a noise level exceeding a maximum noise level threshold defined in the POCs. Therefore, the controller 40 may adjust the motor speed by adjusting the transmitted operating signals such that the motor 61 begins operating at 2933 RPM or 3066 RPM and thus generates a lower sound level. The higher sound level associated with the 3000 RPM motor speed may be indicative of inefficient motor operation, and therefore by changing the motor speed, the motor may operate more efficiently. Because the motor speed may be adjusted such that the blower 60 is operating more efficiently, the drying conditions within the tub 12 may be optimized. As indicated, the process may continue to cycle through 402-407 until the completion of the drying cycle.

Moreover, in various embodiments, the controller 40 may be configured to create and maintain an optimal drying environment within the tub 12 at least in part by varying the rotational speed of the vent fan 62 and/or the operation of the heating elements. In various embodiments, the optimal drying environment within the tub 12 may correspond to an optimal environment for condensation to occur in the duct upon removal of humid air from the tub 12. For example, the controller 40 may be configured to maintain preferred drying characteristics, such as a preferred temperature and/or a preferred humidity level, within the tub 12 by changing the speed of the blower 60 and/or by activating or deactivating the heating element. In various embodiments, the preferred drying characteristics may be defined in the POCs for the dishwasher 10. In various embodiments, the controller 40 may receive signals from the vibration sensor 63 and/or the temperature sensor 70 indicating that the temperature and/or humidity level within the tub 12 does not correspond to the preferred drying characteristics. For example, the controller 40 may cause the vent fan 62 to change its rotation speed upon a determination that the conditions existing within the tub 12 do not correspond to optimal drying conditions. As yet another example, the controller 40 may determine that the humidity level within the tub 12 does not correspond to an optimal drying environment upon receipt of a signal from the vibration sensor 63 indicating that the sound pressure level vibrations emitted by the motor 61 correspond to a high humidity level within the tub 12. As the humidity level within the tub 12 changes, components of the blower 60 (e.g., motor 61 and/or vent fan 62) may emit changing sound pressure level vibrations as the density of the air moved by the blower 60 changes. Thus, the vibration sensor 63 may be configured to detect changes in sound pressure level vibrations as the humidity within the tub 12 changes.

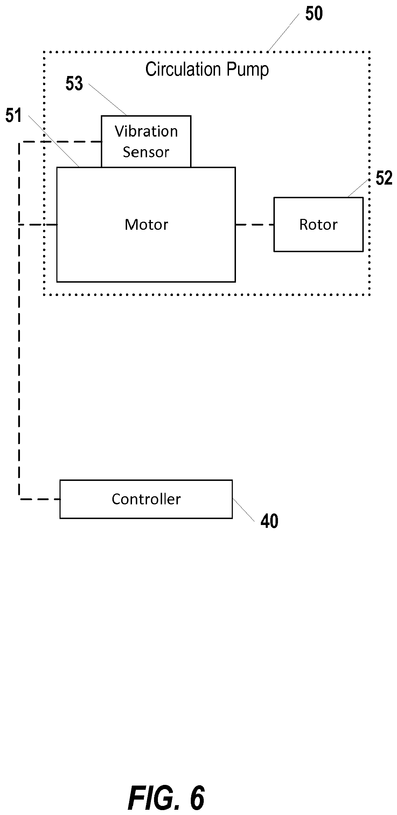

The above-described process is described in reference to a blower configured to facilitate drying of dishware by removing humid air from a dishwasher tub, and in reference to Figure 4. However, it should be understood that a similar process may be utilized to control other powered dishwasher components (e.g., circulation pump 50, drain pump 42). In various embodiments, the vibration sensor 63 may be used to monitor the operating characteristics of a plurality of dishwasher components (e.g., blower 60, drain pump 42, and/or circulation pump 50). In certain embodiments, a plurality of vibration sensors may be utilized to monitor a plurality of dishwasher components. For example, as shown in Figure 6, a vibration sensor 53 similar to vibration sensor 63 may be configured to sense operating characteristics of the circulation pump 50. The vibration sensor 53 may be located in contact with the controller 40, or proximate and/or in contact with the circulation pump 50 and/or circulation pump motor 51, and may be configured to monitor vibrations emitted by the circulation pump motor 51 and/or a circulation pump rotor 52 (e.g., an impeller having a plurality of blades (not shown)) configured to move water through the circulation pump 50.

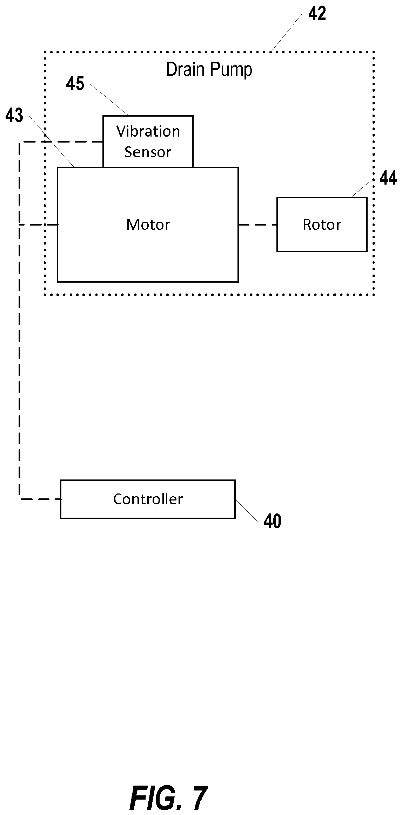

Similarly, as illustrated in Figure 7, a vibration sensor 45 similar to vibration sensor 63 may be configured to sense operating characteristics of the drain pump 42. The vibration sensor 45 may be located in contact with the controller 40, or proximate and/or in contact with drain pump 42 and/or drain pump motor 43. The vibration sensor 45 may be configured to monitor vibrations emitted by the drain pump motor 43 and/or a drain pump rotor 44 (e.g., an impeller having a plurality of blades (not shown)) configured to move water through the drain pump 42.

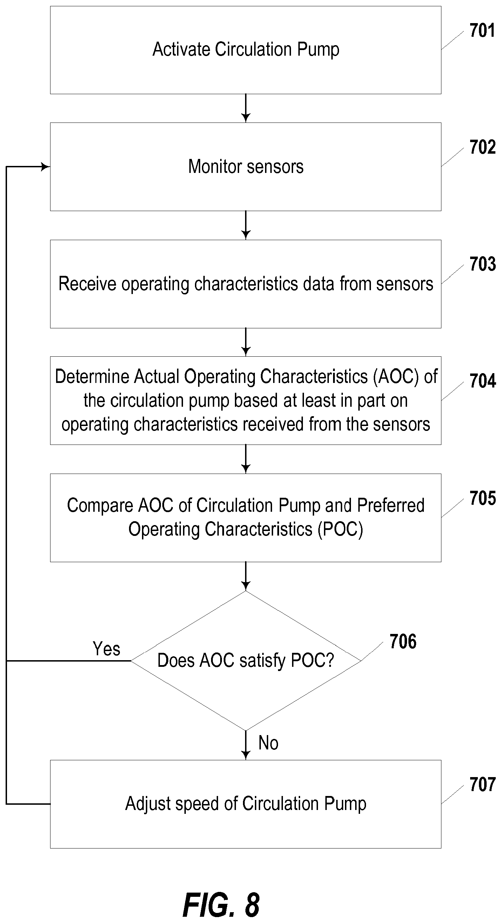

As described in reference to Figures 7 and 8, the controller 40 may be configured to cause the circulation pump motor 51 and/or the drain pump motor 43 to operate at a particular speed based at least in part on signals received from vibration sensor 53 and/or vibration sensor 45. In various embodiments, the signals received from vibration sensor 53 may be indicative of operating characteristics of the circulation pump 50, such as an operating frequency and/or pump rotation speed, and/or the signals received from vibration sensor 45 may be indicative of operating characteristics of the drain pump 42, such as an operating frequency and/or pump rotation speed.

Referring now to Figure 8, the process of optimizing the circulation pump operation may comprise operations for adjusting the circulation pump operation based at least in part on signals received from sensors associated with the circulation pump 50 and/or tub 12. As shown in Figure 8, the circulation pump 50 may be activated at operation 701. In various embodiments, the circulation pump 50 may be selectively activated to pump water throughout the dishwasher 10 during a cleaning cycle.

Moreover, the circulation pump 50 may be activated by receiving a signal from the controller 40 configured to activate the motor 51 associated with the circulation pump 50, and thereby operate the rotor 52 (e.g., an impeller). The process may additionally include monitoring of one or more sensors (702), such as a vibration sensor 53 associated with the circulation pump 50 and/or a water level sensor associated with the tub 12. Like vibration sensor 63, the vibration sensor 53 may comprise an accelerometer, a microphone, or another vibration sensing device configured to monitor vibrations and sound pressure levels within the dishwasher 10.

In various embodiments, operating characteristics of the circulation pump 50 may be received from the one or more sensors at 703. For example, operating characteristics received from the water level sensor may be indicative of a water level existing in a bottom portion of the tub 12. Operating characteristics received from the vibration sensor 53 may be indicative of a vibration frequency and/or vibration amplitude generated by a component of the dishwasher (e.g., sound pressure level vibrations generated by the motor 51). In various embodiments, data received from the sensors may be passed through one or more filters, such as a band-pass filter, to minimize the effect of signal noise on the received signals.

At 704, the controller 40 may determine operating characteristics of the motor 51 based at least in part on the information obtained by the sensors. Such operating characteristics may be determined using processes similar to those described above in reference to the vent fan motor 61. For example, a FFT and/or digital waveform processing may be applied to at least a portion of the received operating characteristics in order to determine the rotation speed and/or other operating characteristics of the motor 51. However, in various embodiments, the fundamental frequency of the received operating characteristics may be determined without applying a FFT and/or digital waveform processing. For example, the FFT may be applied to at least a portion of the operating characteristics received from the vibration sensor 53 to determine a fundamental frequency associated with the received operating characteristics. Based on the determined fundamental frequency, a rotation speed and other characteristics of the motor 51 may be determined. As detailed above in reference to Figure 4, the rotation speed of the motor 51 may be determined based at least in part on the fundamental frequency and the number of commutator bars associated with the armature of the motor 51. Moreover, in various embodiments, the rotation speed of the motor 51 may be determined based at least in part on the fundamental frequency and the number of impeller blades associated with the rotor 52. As previously indicated, each impeller blade may generate a vibration pulse during a single rotation of the impeller. Thus, the rotation speed of the circulation pump motor 51 may be determined by dividing the fundamental frequency by the number of impeller blades. As a non-limiting example, for a circulation pump comprising an impeller having 15 blades, the rotation speed of the circulation pump motor may be determined by dividing the fundamental frequency by 15.

Upon identifying the operating characteristics of the motor 51, the controller 40 may compare the identified operating characteristics of the circulation pump 50 with preferred operating characteristics for the circulation pump 50 at 705. For example, the preferred operating characteristics for the circulation pump 50 may be indicative of a preferred rotor (e.g., impeller) rotation speed or a range of preferred rotor rotation speeds, a preferred maximum motor noise level, a preferred maximum amount of motor vibration, and/or the like. In various embodiments, a plurality of preferred operating characteristics for the circulation pump 50 may be defined for the circulation pump 50, wherein a subset of the plurality of preferred operating characteristics for the circulation pump 50 may be associated with different stages in a washing cycle of the dishwasher 10. In various embodiments, data indicative of the preferred operating characteristics for the circulation pump 50 for the circulation pump 50 may be stored as a portion of the POCs discussed herein in a memory associated with the controller 40.

The comparison may comprise a determination of whether the operating characteristics satisfy the preferred operating characteristics for the circulation pump 50 at operation 706. The determination may involve a determination whether the operating characteristics for the circulation pump 50 fall into an acceptable range (e.g., a defined range of preferred characteristics, a tolerance range surrounding a preferred operating characteristic value, below or equal to a maximum level, above or equal to a minimum level, and/or the like). Upon a determination that the operating characteristics satisfy the preferred operating characteristics for the circulation pump 50, the sensors (e.g., vibration sensor 53) may continue to be monitored during operation 702. The process proceeds to cycle through 702-707 as necessary until the drying cycle is complete.

Upon a determination that the operating characteristics of the circulation pump 50 do not satisfy the preferred operating characteristics for the circulation pump 50, the operating signals sent to the circulation pump 50 to operate the circulation pump motor 51 may be modified in order to adjust the speed of the motor 51. After adjusting the speed of the motor 51 (e.g., by transmitting the adjusted operating signal to the motor 51), the process returns to 702 to continue monitoring the sensors. As a non-limiting example, it may be determined that the circulation pump 50 emits a higher frequency and/or higher volume sound pressure level during time periods in which the circulation pump 50 is operating inefficiently (e.g., pumping air instead of water). Thus, the preferred operating characteristics for the circulation pump 50 may comprise a maximum sound frequency and/or sound volume that correspond with inefficient circulation pump operation. Upon a determination that the operating characteristics of the circulation pump 50, as sensed by the vibration sensor 53, exceeds the maximum noise frequency and/or volume, the controller 40 may slow the speed of the circulation pump 50 to avoid potentially inefficient operation.

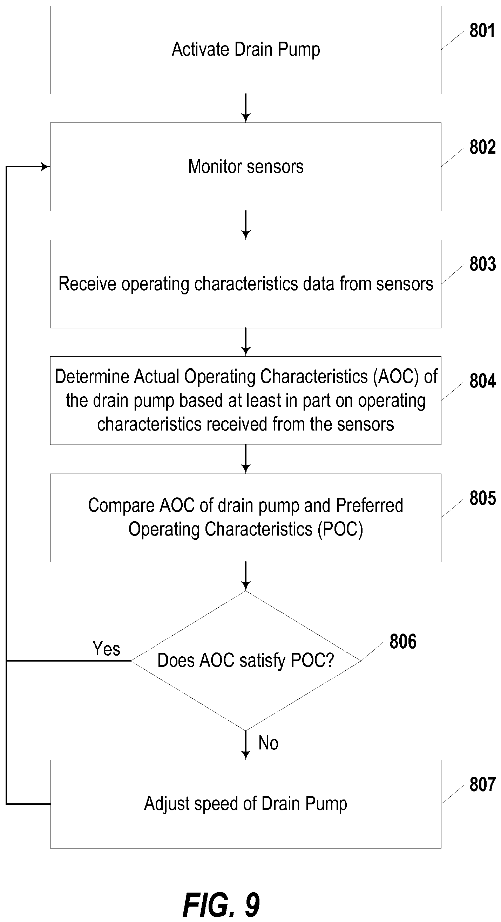

Similarly, as illustrated in Figure 9, the process of optimizing the drain pump operation may comprise operations for adjusting the drain pump operation based at least in part on signals received from sensors associated with the drain pump 42 and/or tub 12. As shown in Figure 9, the drain pump 42 may be activated at operation 801. For example, the drain pump 42 may be activated by receiving a signal from the controller 40 configured to activate the motor 43 associated with the drain pump 42, and thereby operate the rotor 44 (e.g., impeller). The process may additionally include monitoring of one or more sensors (802), such as a vibration sensor 45 associated with the drain pump 42 and/or a water level sensor associated with the tub 12 and/or the sump 14. Like sensors 63 and 53, the vibration sensor 45 may comprise an accelerometer, a microphone, or another vibration sensing device configured to monitor vibrations and sound pressure levels within the dishwasher 10.

In various embodiments, operating characteristics of the drain pump 42 may be received from the one or more sensors at 803. The operating characteristics received from the vibration sensor 45 may be indicative of a vibration frequency and/or vibration amplitude generated by a component of the dishwasher (e.g., sound pressure level vibrations generated by the motor 43). In various embodiments, data received from the sensors may be passed through one or more filters, such as a band-pass filter, to minimize the effect of signal noise on the received signals.

At 804, the controller 40 may determine operating characteristics of the motor 43 based at least in part on the information obtained by the sensors. Such operating characteristics may be determined using processes similar to those described above in reference to the vent fan motor 61. For example, a Fast Fourier Transform (FFT) and/or digital waveform processing may be applied to at least a portion of the received operating characteristics in order to determine the rotation speed and/or other operating characteristics of the motor 43. For example, the FFT may be applied to at least a portion of the operating characteristics received from the vibration sensor 45 to determine a fundamental frequency associated with the received operating characteristics. Based on the determined fundamental frequency, a rotation speed and other characteristics of the motor 43 may be determined. As detailed above in reference to Figure 4, the rotation speed of the motor 43 may be determined based at least in part on the fundamental frequency and the number of commutator bars associated with the armature of the motor 43. Moreover, in various embodiments, the rotation speed of the motor 43 may be determined based at least in part on the fundamental frequency and the number of impeller blades associated with the rotor 44. As previously indicated, each impeller blade may generate a vibration pulse during a single rotation of the impeller. Thus, the rotation speed of the drain pump motor 43 may be determined by dividing the fundamental frequency by the number of impeller blades.

Upon identifying the operating characteristics of the motor 43, the controller 40 may compare the identified operating characteristics of the drain pump 42 with preferred operating characteristics for the drain pump 42 at 805. For example, the preferred operating characteristics for the drain pump 42 may be indicative of a preferred rotor rotation speed or a range of preferred rotor rotation speeds, a preferred maximum motor noise level, a preferred maximum amount of motor vibration, and/or the like. In various embodiments, a plurality of preferred operating characteristics for the drain pump 42 may be defined for the drain pump 42, wherein a subset of the plurality of preferred operating characteristics for the drain pump 42 may be associated with different stages in a washing cycle of the dishwasher 10. In various embodiments, data indicative of the preferred operating characteristics for the drain pump 42 may be stored as a portion of the discussed POCs in a memory associated with the controller 40.

The comparison may comprise a determination of whether the operating characteristics of the drain pump 42 satisfy the preferred operating characteristics for the drain pump 42 at operation 806. The determination may involve a determination whether the operating characteristics fall into an acceptable range (e.g., a defined range ofpreferred characteristics, a tolerance range surrounding a preferred operating characteristic value, below or equal to a maximum level, above or equal to a minimum level, and/or the like). Upon a determination that the operating characteristics satisfy the preferred operating characteristics for the drain pump 42, the sensors may continue to be monitored during operation 802. The process proceeds to cycle through 802-807 as necessary.

Upon a determination that the operating characteristics of the drain pump 42 do not satisfy the preferred operating characteristics for the drain pump 42, the operating signals sent to the drain pump 42 to operate the motor 43 may be modified in order to adjust the speed of the motor 43. After adjusting the speed of the motor 43 (e.g., by transmitting the adjusted operating signal to the motor 43), the process returns to 802 to continue monitoring the sensors. For example, it may be determined that the drain pump 42 emits a higher frequency and/or higher volume sound pressure level during time periods in which the drain pump 42 is operating inefficiently (e.g., pumping "dry" air instead of water). Thus, the preferred operating characteristics for the drain pump 42 may comprise a maximum sound frequency and/or sound volume that correspond with inefficient drain pump operation. Upon a determination that the operating characteristics of the drain pump 42, as sensed by the vibration sensor 45, exceeds the maximum noise frequency and/or volume, the controller 40 may slow the speed of the drain pump 42 to avoid potentially inefficient operation.

## Claims

1. A dishwasher (10) comprising:
a tub (12);
a blower (60) configured to remove air from the tub (12), the blower (60) comprising a vent fan (62) and a vent fan motor (61), wherein the vent fan motor (61) is configured to cause the vent fan (62) to rotate and to evacuate the air from the tub (12); **characterized by**
a vibration sensor (63) configured to sense operating characteristics of the vent fan motor (61) during a drying cycle; and
a controller (40) in communication with the blower (60) and the vibration sensor (63), wherein the controller (40) is configured to:
cause the vent fan motor (61) to operate at variable speeds;
receive input from the vibration sensor (63) indicating operating characteristics of the vent fan motor (61);
determine whether the received operating characteristics of the vent fan motor (61) satisfy preferred operating characteristics of the vent fan motor (61); and
adjust, in response to determining that the received operating characteristics of the vent fan motor (61) do not satisfy the preferred operating characteristics, the speed of the vent fan motor (61).

2. The dishwasher of Claim 1, wherein the operating characteristics of the vent fan motor (61) comprise an operating frequency; and the controller (40) is configured to determine whether the received operating characteristics of the vent fan motor (61) satisfy the preferred operating characteristics of the vent fan motor (61) by determining whether the operating frequency of the received operating characteristics of the vent fan motor (61) satisfies a preferred operating frequency.

3. The dishwasher of Claim 2, wherein the controller (40) is additionally configured to determine a rotation speed of the vent fan motor (61), wherein determining a rotation speed of the vent fan motor (61) comprises applying a Fast Fourier Transform to at least a portion of the operating characteristics.

4. The dishwasher of Claim 2, wherein the controller (40) is additionally configured to determine a rotation speed of the vent fan motor (61), wherein determining a rotation speed of the vent fan motor (61) comprises applying digital waveform processing to at least a portion of the operating characteristics.

5. The dishwasher of any of Claims 2-4, wherein the operating frequency is determined based at least in part on received changes in sound pressure generated by the vent fan motor (61).

6. The dishwasher of any of Claims 1-5, wherein the preferred operating characteristics are configured to minimize noise generated by the vent fan motor (61).

7. The dishwasher of any of Claims 1-6, wherein the preferred operating characteristics are configured to minimize an amount of energy used by the dishwasher (10).

8. The dishwasher of any of Claims 1-7 further comprising a temperature sensor (70) configured to sense an air temperature within the tub (12); and
wherein the controller (40) is further configured to:
determine whether the received operating characteristics of the vent fan motor (61) and the sensed air temperature satisfy preferred drying characteristics; and
adjust, in response to determining that the received operating characteristics of the vent fan motor (61) and the sensed air temperature do not satisfy the preferred drying characteristics, the speed of the vent fan motor (61).

9. The dishwasher of any of Claims 1-8 further comprising a pump (42, 50) and a pump motor (43, 51) configured to drive the pump, wherein the controller (40) is further configured to:
cause the pump motor (43, 51) to operate at variable speeds;
receive input from a pump vibration sensor (45, 53) indicating operating characteristics of the pump motor (43, 51);
determine whether the received operating characteristics of the pump motor (43, 51) satisfy preferred operating characteristics of the pump motor (43, 51); and
adjust, in response to determining that the received operating characteristics of the pump motor (43, 51) do not satisfy the preferred operating characteristics, the speed of the pump motor (43, 51).

10. The dishwasher of Claim 9, wherein the pump comprises a circulation pump and the pump motor (43, 51) comprises a circulation pump motor (51).

11. The dishwasher of Claim 9, wherein the pump comprises a drain pump and the pump motor (43, 51) comprises a drain pump motor (43).

12. A method of operating a dishwasher blower (60) comprising a vent fan (62) and a vent fan motor (61) associated with a dishwasher, the method comprising:
causing the vent fan motor (61) to operate at variable speeds; **characterized by**
receiving input from a vibration sensor (63) indicating operating characteristics of the vent fan motor (61) during a drying cycle;
determining whether the received operating characteristics of the vent fan motor (61) satisfy preferred operating characteristics of the vent fan motor (61); and
adjusting, in response to determining that the received operating characteristics of the vent fan motor (61) do not satisfy the preferred operating characteristics, the speed of the vent fan motor (61).

13. The method of Claim 12, wherein the operating characteristics of the vent fan motor (61) comprise an operating frequency, and said determining comprises determining whether the received operating characteristics of the vent fan motor (61) satisfy the preferred operating characteristics of the vent fan motor (61) by determining whether the operating frequency of the received operating characteristics of the vent fan motor (61) satisfies a preferred operating frequency.

14. The method of either of Claims 12 or 13 further comprising:
receiving input from a temperature sensor (70) indicating an air temperature within the dishwasher;
determining whether the received operating characteristics of the vent fan motor (61) and the sensed air temperature satisfy preferred drying characteristics; and
adjusting, in response to determining that the received operating characteristics of the vent fan motor (61) and the sensed air temperature do not satisfy the preferred drying characteristics, the speed of the vent fan motor (61).

15. A computer program product for operating a dishwasher blower (60) comprising a vent fan (62) and a vent fan motor (61) associated with a dishwasher, wherein the computer program product comprises a non-transitory computer readable storage medium having program code portions stored thereon, the program code portions being configured when said computer program product is run on a control device to execute the method of any of Claims 12-14.

## Patentansprüche

1. Geschirrspülmaschine (10), umfassend:
eine Wanne (12);
ein Gebläse (60), das ausgelegt ist, Luft aus der Wanne (12) abzuführen, wobei das Gebläse (60) einen Abluftventilator (62) und einen Abluftventilatormotor (61) umfasst, wobei der Abluftventilatormotor (61) ausgelegt ist, den Abluftventilator (62) zu veranlassen, sich zu drehen und die Luft aus der Wanne (12) zu entlüften; **gekennzeichnet durch**
einen Vibrationssensor (63), der ausgelegt ist, Betriebseigenschaften des Abluftventilatormotors (61) während eines Trocknungszyklus zu erfassen; und
eine Steuerung (40) in Kommunikation mit dem Gebläse (60) und dem Vibrationssensor (63), wobei die Steuerung (40) zu Folgendem ausgelegt ist:
Veranlassen des Abluftventilatormotors (61), bei veränderlichen Drehzahlen zu arbeiten;
Empfangen einer Eingabe von dem Vibrationssensor (63), die Betriebseigenschaften des Abluftventilatormotors (61) anzeigt;
Bestimmen, ob die empfangenen Betriebseigenschaften des Abluftventilatormotors (61) bevorzugte Betriebseigenschaften des Abluftventilatormotors (61) erfüllen; und
Anpassen, in Reaktion auf ein Bestimmen, dass die empfangenen Betriebseigenschaften des Abluftventilatormotors (61) nicht die bevorzugten Betriebseigenschaften erfüllen, der Drehzahl des Abluftventilatormotors (61).

2. Geschirrspülmaschine nach Anspruch 1, wobei die Betriebseigenschaften des Abluftventilatormotors (61) eine Betriebsfrequenz umfassen; und die Steuerung (40) ausgelegt ist, zu bestimmen, ob die empfangenen Betriebseigenschaften des Abluftventilatormotors (61) die bevorzugten Betriebseigenschaften des Abluftventilatormotors (61) erfüllen, durch Bestimmen, ob die Betriebsfrequenz der empfangenen Betriebseigenschaften des Abluftventilatormotors (61) eine bevorzugte Betriebsfrequenz erfüllt.

3. Geschirrspülmaschine nach Anspruch 2, wobei die Steuerung (40) zusätzlich ausgelegt ist, eine Drehzahl des Abluftventilatormotors (61) zu bestimmen, wobei das Bestimmen einer Drehzahl des Abluftventilatormotors (61) Anwenden einer schnellen Fouriertransformation auf zumindest einen Teil der Betriebseigenschaften umfasst.

4. Geschirrspülmaschine nach Anspruch 2, wobei die Steuerung (40) zusätzlich ausgelegt ist, eine Drehzahl des Abluftventilatormotors (61) zu bestimmen, wobei das Bestimmen einer Drehzahl des Abluftventilatormotors (61) Anwenden einer digitalen Wellenformbearbeitung auf zumindest einen Teil der Betriebseigenschaften umfasst.

5. Geschirrspülmaschine nach einem der Ansprüche 2-4, wobei die Betriebsfrequenz basierend zumindest teilweise auf empfangenen Änderungen bei einem durch den Abluftventilatormotor (61) erzeugten Schalldruck bestimmt ist.

6. Geschirrspülmaschine nach einem der Ansprüche 1-5, wobei die bevorzugten Betriebseigenschaften ausgelegt sind, ein durch den Abluftventilatormotor (61) erzeugtes Geräusch zu minimieren.

7. Geschirrspülmaschine nach einem der Ansprüche 1-6, wobei die bevorzugten Betriebseigenschaften ausgelegt sind, eine durch die Geschirrspülmaschine (10) verbrauchte Menge an Energie zu minimieren.

8. Geschirrspülmaschine nach einem der Ansprüche 1-7, ferner umfassend einen Temperatursensor (70), der ausgelegt ist, eine Lufttemperatur in der Wanne (12) zu erfassen; und
wobei die Steuerung (40) ferner zu Folgendem ausgelegt ist:
Bestimmen, ob die empfangenen Betriebseigenschaften des Abluftventilatormotors (61) und die erfasste Lufttemperatur bevorzugte Trocknungseigenschaften erfüllen; und
Anpassen, in Reaktion auf ein Bestimmen, dass die empfangenen Betriebseigenschaften des Abluftventilatormotors (61) und die erfasste Lufttemperatur nicht die bevorzugten Trocknungseigenschaften erfüllen, der Drehzahl des Abluftventilatormotors (61).

9. Geschirrspülmaschine nach einem der Ansprüche 1-8, ferner umfassend eine Pumpe (42, 50) und einen Pumpenmotor (43, 51), der ausgelegt ist, die Pumpe anzutreiben, wobei die Steuerung (40) ferner zu Folgendem ausgelegt ist:
Veranlassen des Pumpenmotors (43, 51), bei veränderlichen Drehzahlen zu arbeiten;
Empfangen einer Eingabe von einem Pumpenvibrationssensor (45, 53), die Betriebseigenschaften des Pumpenmotors (43, 51) anzeigt;
Bestimmen, ob die empfangenen Betriebseigenschaften des Pumpenmotors (43, 51) bevorzugte Betriebseigenschaften des Pumpenmotors (43, 51) erfüllen; und
Anpassen, in Reaktion auf ein Bestimmen, dass die empfangenen Betriebseigenschaften des Pumpenmotors (43, 51) nicht die bevorzugten Betriebseigenschaften erfüllen, der Drehzahl des Pumpenmotors (43, 51).

10. Geschirrspülmaschine nach Anspruch 9, wobei die Pumpe eine Umwälzpumpe umfasst und der Pumpenmotor (43, 51) einen Umwälzpumpenmotor (51) umfasst.

11. Geschirrspülmaschine nach Anspruch 9, wobei die Pumpe eine Ablaufpumpe umfasst und der Pumpenmotor (43, 51) einen Ablaufpumpenmotor (43) umfasst.

12. Verfahren zum Betreiben eines Geschirrspülmaschinengebläses (60) umfassend einen Abluftventilator (62) und einen Abluftventilatormotor (61) in Zusammenhang mit einer Geschirrspülmaschine, wobei das Verfahren umfasst:
Veranlassen des Abluftventilatormotors (61), bei veränderlichen Drehzahlen zu arbeiten; **gekennzeichnet durch**
Empfangen einer Eingabe von einem Vibrationssensor (63), die Betriebseigenschaften des Abluftventilatormotors (61) anzeigt, während eines Trocknungszyklus;
Bestimmen, ob die empfangenen Betriebseigenschaften des Abluftventilatormotors (61) bevorzugte Betriebseigenschaften des Abluftventilatormotors (61) erfüllen; und
Anpassen, in Reaktion auf ein Bestimmen, dass die empfangenen Betriebseigenschaften des Abluftventilatormotors (61) nicht die bevorzugten Betriebseigenschaften erfüllen, der Drehzahl des Abluftventilatormotors (61).

13. Verfahren nach Anspruch 12, wobei die Betriebseigenschaften des Abluftventilatormotors (61) eine Betriebsfrequenz umfassen, und das Bestimmen Bestimmen, ob die empfangenen Betriebseigenschaften des Abluftventilatormotors (61) die bevorzugten Betriebseigenschaften des Abluftventilatormotors (61) erfüllen, durch Bestimmen, ob die Betriebsfrequenz der empfangenen Betriebseigenschaften des Abluftventilatormotors (61) eine bevorzugte Betriebsfrequenz erfüllt, umfasst.

14. Verfahren nach einem der Ansprüche 12 oder 13, ferner umfassend:
Empfangen einer Eingabe von einem Temperatursensor (70), die eine Lufttemperatur in der Geschirrspülmaschine anzeigt;
Bestimmen, ob die empfangenen Betriebseigenschaften des Abluftventilatormotors (61) und die erfasste Lufttemperatur bevorzugte Trocknungseigenschaften erfüllen; und
Anpassen, in Reaktion auf ein Bestimmen, dass die empfangenen Betriebseigenschaften des Abluftventilatormotors (61) und die erfasste Lufttemperatur nicht die bevorzugten Trocknungseigenschaften erfüllen, der Drehzahl des Abluftventilatormotors (61).

15. Computerprogrammprodukt zum Betreiben eines Geschirrspülmaschinengebläses (60) umfassend einen Abluftventilator (62) und einen Abluftventilatormotor (61) in Zusammenhang mit einer Geschirrspülmaschine, wobei das Computerprogrammprodukt ein nichtflüchtiges computerlesbares Speichermedium umfasst, auf dem Programmcodeabschnitte gespeichert sind, wobei die Programmcodeabschnitte ausgelegt sind, wenn das Computerprogrammprodukt auf einer Steuervorrichtung ausgeführt wird, das Verfahren nach einem der Ansprüche 12-14 auszuführen.

## Revendications

1. Lave-vaisselle (10), comprenant :
une cuve (12) ;
une soufflante (60) configurée pour extraire l'air de la cuve (12), la soufflante (60) comprenant un ventilateur d'extraction (62) et un moteur (61) de ventilateur d'extraction, le moteur (61) de ventilateur d'extraction étant configuré pour entraîner le ventilateur d'extraction (62) en rotation et lui faire évacuer l'air de la cuve (12) ; **caractérisé par**
un capteur de vibrations (63) configuré pour capter des caractéristiques de fonctionnement du moteur (61) de ventilateur d'extraction au cours d'un cycle de séchage ; et
une unité de commande (40) en communication avec la soufflante (60) et le capteur de vibrations (63), l'unité de commande (40) étant configurée pour :
faire fonctionner le moteur (61) de ventilateur d'extraction à des vitesses variables ;
recevoir une entrée depuis le capteur de vibrations (63) indiquant des caractéristiques de fonctionnement du moteur (61) de ventilateur d'extraction ;
déterminer si les caractéristiques de fonctionnement reçues du moteur (61) de ventilateur d'extraction correspondent ou non à des caractéristiques de fonctionnement préférées du moteur (61) de ventilateur d'extraction ; et
ajuster, en cas de détermination que les caractéristiques de fonctionnement reçues du moteur (61) de ventilateur d'extraction ne correspondent pas aux caractéristiques de fonctionnement préférées, la vitesse du moteur (61) de ventilateur d'extraction.

2. Lave-vaisselle selon la revendication 1, dans lequel les caractéristiques de fonctionnement du moteur (61) de ventilateur d'extraction comprennent une fréquence de fonctionnement ; et l'unité de commande (40) est configurée pour déterminer si les caractéristiques de fonctionnement reçues du moteur (61) de ventilateur d'extraction correspondent ou non aux caractéristiques de fonctionnement préférées du moteur (61) de ventilateur d'extraction en déterminant si la fréquence de fonctionnement des caractéristiques de fonctionnement reçues du moteur (61) de ventilateur d'extraction correspond ou non à une fréquence de fonctionnement préférée.

3. Lave-vaisselle selon la revendication 2, dans lequel l'unité de commande (40) est configurée également pour déterminer une vitesse de rotation du moteur (61) de ventilateur d'extraction, la détermination d'une vitesse de rotation du moteur (61) de ventilateur d'extraction comprenant l'application d'une transformation de Fourier rapide à au moins une partie des caractéristiques de fonctionnement.

4. Lave-vaisselle selon la revendication 2, dans lequel l'unité de commande (40) est configurée également pour déterminer une vitesse de rotation du moteur (61) de ventilateur d'extraction, la détermination d'une vitesse de rotation du moteur (61) de ventilateur d'extraction comprenant l'application d'un traitement numérique de formes d'onde à au moins une partie des caractéristiques de fonctionnement.

5. Lave-vaisselle selon l'une quelconque des revendications 2 à 4, dans lequel la fréquence de fonctionnement est déterminée sur la base au moins en partie de variations de pression acoustique reçues générées par le moteur (61) de ventilateur d'extraction.

6. Lave-vaisselle selon l'une quelconque des revendications 1 à 5, dans lequel les caractéristiques de fonctionnement préférées sont configurées pour minimiser le bruit généré par le moteur (61) de ventilateur d'extraction.

7. Lave-vaisselle selon l'une quelconque des revendications 1 à 6, dans lequel les caractéristiques de fonctionnement préférées sont configurées pour minimiser une quantité d'énergie utilisée par le lave-vaisselle (10).

8. Lave-vaisselle selon l'une quelconque des revendications 1 à 7, comprenant en outre un capteur de température (70) configuré pour capter une température d'air à l'intérieur de la cuve (12) ; et
l'unité de commande (40) étant configurée en outre pour :
déterminer si les caractéristiques de fonctionnement reçues du moteur (61) de ventilateur d'extraction et la température d'air captée correspondent ou non à des caractéristiques de séchage préférées ; et
ajuster, en cas de détermination que les caractéristiques de fonctionnement reçues du moteur (61) de ventilateur d'extraction et la température d'air captée ne correspondent pas aux caractéristiques de séchage préférées, la vitesse du moteur (61) de ventilateur d'extraction.

9. Lave-vaisselle selon l'une quelconque des revendications 1 à 8, comprenant en outre une pompe (42, 50) et un moteur (43, 51) de pompe configuré pour entraîner la pompe, l'unité de commande (40) étant configurée en outre pour :
faire fonctionner le moteur (43, 51) de pompe à des vitesses variables ;
recevoir une entrée depuis un capteur de vibrations (45, 53) de pompe indiquant des caractéristiques de fonctionnement du moteur (43, 51) de pompe ;
déterminer si les caractéristiques de fonctionnement reçues du moteur (43, 51) de pompe correspondent ou non à des caractéristiques de fonctionnement préférées du moteur (43, 51) de pompe ; et
ajuster, en cas de détermination que les caractéristiques de fonctionnement reçues du moteur (43, 51) de pompe ne correspondent pas aux caractéristiques de fonctionnement préférées, la vitesse du moteur (43, 51) de pompe.

10. Lave-vaisselle selon la revendication 9, dans lequel la pompe comprend une pompe de recirculation et le moteur (43, 51) de pompe comprend un moteur (51) de pompe de recirculation.

11. Lave-vaisselle selon la revendication 9, dans lequel la pompe comprend une pompe de vidange et le moteur (43, 51) de pompe comprend un moteur (43) de pompe de vidange.

12. Procédé pour faire fonctionner une soufflante (60) de lave-vaisselle comprenant un ventilateur d'extraction (62) et un moteur (61) de ventilateur d'extraction associée à un lave-vaisselle, le procédé comprenant :
le fonctionnement du moteur (61) de ventilateur d'extraction à des vitesses variables ; **caractérisé par**
la réception d'une entrée depuis un capteur de vibrations (63) indiquant des caractéristiques de fonctionnement du moteur (61) de ventilateur d'extraction au cours d'un cycle de séchage ;
la détermination si les caractéristiques de fonctionnement reçues du moteur (61) de ventilateur d'extraction correspondent ou non à des caractéristiques de fonctionnement préférées du moteur (61) de ventilateur d'extraction ; et
l'ajustement, en cas de détermination que les caractéristiques de fonctionnement reçues du moteur (61) de ventilateur d'extraction ne correspondent pas aux caractéristiques de fonctionnement préférées, de la vitesse du moteur (61) de ventilateur d'extraction.

13. Procédé selon la revendication 12, dans lequel les caractéristiques de fonctionnement du moteur (61) de ventilateur d'extraction comprennent une fréquence de fonctionnement, et ladite détermination comprend la détermination si les caractéristiques de fonctionnement reçues du moteur (61) de ventilateur d'extraction correspondent ou non aux caractéristiques de fonctionnement préférées du moteur (61) de ventilateur d'extraction par détermination si la fréquence de fonctionnement des caractéristiques de fonctionnement reçues du moteur (61) de ventilateur d'extraction correspond ou non à une fréquence de fonctionnement préférée.

14. Procédé selon l'une ou l'autre des revendications 12 et 13, comprenant en outre :
la réception d'une entrée depuis un capteur de température (70) indiquant une température d'air à l'intérieur du lave-vaisselle ;
la détermination si les caractéristiques de fonctionnement reçues du moteur (61) de ventilateur d'extraction et la température d'air captée correspondent ou non à des caractéristiques de séchage préférées ; et
l'ajustement, en cas de détermination que les caractéristiques de fonctionnement reçues du moteur (61) de ventilateur d'extraction et la température d'air captée ne correspondent pas aux caractéristiques de séchage préférées, de la vitesse du moteur (61) de ventilateur d'extraction.

15. Produit-programme d'ordinateur pour faire fonctionner une soufflante (60) de lave-vaisselle comprenant un ventilateur d'extraction (62) et un moteur (61) de ventilateur d'extraction associée à un lave-vaisselle, le produit-programme d'ordinateur comprenant un support d'enregistrement non transitoire lisible par ordinateur sur lequel sont enregistrées de parties de code de programme, les parties de code de programme étant configurées, lorsque ledit produit-programme d'ordinateur est exécuté sur un dispositif de commande, pour réaliser le procédé selon l'une quelconque des revendications 12 à 14.
